# EUROPÄISCHE PATENTSCHRIFT

(11) **EP 2 602 050 B1**
(45) Veröffentlichungstag und Bekanntmachung des Hinweises auf die Patenterteilung: **14.09.2016**
(21) Anmeldenummer: 12195473.9
(22) Anmeldetag: 04.12.2012
(51) Int. Cl.: B23P 15/04, F01D 5/00

(54) **Verfahren zur Auswahl einer Schaufelgeometrie**
Method for selecting a blade geometry
Procédé destiné à la sélection d'une géométrie d'aube

(30) Priorität: 08.12.2011 DE 102011120682
(43) Veröffentlichungstag der Anmeldung: 12.06.2013
(73) Patentinhaber: Rolls-Royce Deutschland Ltd & Co KG, 15827 Blankenfelde-Mahlow (DE)
(72) Erfinder: Hubig, Christoph, 01324 Dresden (DE); Bruschewski, Martin, 63225 Langen (DE); Loof, Carsten, 61440 Oberursel (DE)
(74) Vertreter: Kronthaler, Wolfgang N.K.

(56) Entgegenhaltungen:
- EP-A1- 2 020 638
- WO-A1-2012/019584
- Rolf Dornberger ET AL: "MULTIDISCIPLINARY OPTIMIZATION IN TURBOMACHINERY DESIGN", European Congress on Computational Methods in Applied Sciences and Engineering, 14. September 2000 (2000-09-14), Seiten 1-15, XP055055004, Barcelona Gefunden im Internet: URL:http://www.google.nl/url?sa=t&rct=j&q= &esrc=s&source=web&cd=1&ved=0CDMQFjAA&url= http%3A%2F%2Fciteseerx.ist.psu.edu%2Fviewd oc%2Fdownload%3Fdoi%3D10.1.1.18.8046%26rep %3Drep1%26type%3Dpdf&ei=7100UYDCKsbfsgbk8Y AQ&usg=AFQjCNEi1JJxuWGYv6oGUMtKHaY76d4gXg& bvm=bv.43148975,d.Yms [gefunden am 2013-03-01]
- JURECZKO M ET AL: "Optimisation of wind turbine blades", JOURNAL OF MATERIALS PROCESSING TECHNOLOGY, ELSEVIER, NL, [Online] Bd. 167, Nr. 2-3, 30. August 2005 (2005-08-30), Seiten 463-471, XP027806427, ISSN: 0924-0136 Gefunden im Internet: URL:http://www.theinnovationmachine.com/Th e%20Learning%20Library/Boeing%20Titanium%2 0Machining%20Presentation.pdf> [gefunden am 2005-08-30]
- Anonymous: "High Performance Ti Machining", , 1. Januar 2008 (2008-01-01), Seiten 1-60, XP055054998, Gefunden im Internet: URL:http://www.theinnovationmachine.com/Th e Learning Library/Boeing Titanium Machining Presentation.pdf [gefunden am 2013-03-01]

## Beschreibung

Die Erfindung betrifft ein Verfahren zur Auswahl einer Schaufelgeometrie für ein aus Vollmaterial herzustellendes Schaufelrad für ein Triebwerk aus einer Vielzahl von vorgegebenen Schaufelgeometrien gemäß der im Oberbegriff des Patentanspruches 1 näher definierten Art.

Aus der Praxis sind Schaufelräder bekannt, welche aus Vollmaterial gefräst werden. Damit das jeweilige Schaufelrad vorgegebenen Randbedingungen bestmöglich entspricht, werden Verfahren eingesetzt, mit denen aus einer Vielzahl von Schaufelgeometrien die für den Anwendungsfall am besten geeignete Schaufelgeometrie ausgewählt wird. Sämtliche Schaufelgeometrien werden hierzu hinsichtlich ihrer aerodynamischen und strukturmechanischen Eigenschaften analysiert. Um eine objektive Auswahl treffen zu können, wird jeder Schaufelgeometrie wenigstens ein Kennwert, welcher aerodynamische Eigenschaften der jeweiligen Schaufelgeometrie kennzeichnet, und wenigstens ein Kennwert, welcher strukturmechanische Eigenschaften der jeweiligen Schaufelgeometrie kennzeichnet, zugeordnet. Durch eine Zusammenschau aus einer vorgegebenen Gewichtung der einzelnen Kennwerte mit dem jeweils zugeordneten Kennwert wird für jede Schaufelgeometrie ein Gesamtwert ermittelt und diejenige Schaufelgeometrie ausgewählt, welche den größten Gesamtwert aufweist.

In einem daran anschließenden Verfahrensschritt wird diese Schaufelgeometrie hinsichtlich ihrer Fertigbarkeit überprüft, d. h. es wird überprüft, ob die Schaufelggeometrie aus dem Vollmaterial gefräst werden kann. Ist dies nicht der Fall,
muss die Schaufelgeometrie abgeändert werden. Eine hierdurch bedingte Abänderung der Schaufelgeometrie kann allerdings die aerodynamischen und strukturmechanischen Eigenschaften negativ beeinflussen. Gegebenenfalls muss ein Auslegungsprozess der Schaufelgeometrie zu diesem Zeitpunkt neu gestartet werden, wodurch insgesamt sehr hohe Entwicklungskosten für die Schaufelauslegung und die Entwicklung einer Fertigungsstrategie entstehen. Durch diesen zusätzlichen Zeitaufwand kann es zu Verzögerungen in der Fertigung und im Vertrieb der Schaufelräder kommen.

Anforderungen hinsichtlich der Fertigbarkeit der Schaufelräder werden bei diesem Vorgehen nicht oder erst nach der eigentlichen Schaufelauslegung berücksichtigt, so dass eine Frässtrategie lediglich für eine vorgegebene Geometrie optimiert werden kann.

Aus Rolf Dornberger et al., "Multidisciplinary optimization in turbomachinery design", European Congress on Computational Methods in Applied Sciences and Engineering, 14. September 2000, Seiten 1-15, ist es bekannt, Turbinen simultan hinsichtlich aerodynamischer Eigenschaften, mechanischer Eigenschaften und die Kosten betreffender Eigenschaften zu optimieren.

Der vorliegenden Erfindung liegt daher die Aufgabe zugrunde, ein Verfahren zur Auswahl einer Schaufelgeometrie eines aus Vollmaterial herzustellenden Schaufelrads für ein Triebwerk aus einer Vielzahl von vorgegebenen Schaufelgeometrien zur Verfügung zu stellen, mittels welchem eine Schaufelgeometrie ausgewählt wird, welche neben guten aerodynamischen und strukturmechanischen Eigenschaften gut fertigbar ist.

Erfindungsgemäß wird diese Aufgabe mit einem Verfahren mit den Merkmalen des Patentanspruches 1 gelöst.

Es wird ein Verfahren zur Auswahl einer Schaufelgeometrie für ein aus Vollmaterial herzustellendes Schaufelrad für eine Turbomaschine aus einer Vielzahl von vorgegebenen Schaufelgeometrien vorgeschlagen, wobei für die vorgegebenen Schaufelgeometrien jeweils wenigstens ein eine aerodynamische Eigenschaft der Schaufelgeometrie kennzeichnender Kennwert und wenigstens ein eine Strukturmechanik der Schaufelgeometrie kennzeichnender Kennwert in einem Datenspeicher hinterlegt wird, und eine Datenauswerteeinrichtung zu jeder Schaufelgeometrie einen Gesamtwert ermittelt, wobei die Datenauswerteeinrichtung wenigstens die Schaufelgeometrie auswählt, deren Gesamtwert einen Extremwert von sämtlichen berechneten Gesamtwerten der Schaufelgeometrien aufweist, wobei in dem Datenspeicher zusätzlich zu den Schaufelgeometrien wenigstens ein eine Fertigbarkeit der jeweiligen Schaufelgeometrie kennzeichnender Kennwert hinterlegt wird und die Datenauswerteeinrichtung bei der Ermittlung des Gesamtwerts der jeweiligen Schaufelgeometrie auch den die Fertigbarkeit kennzeichnenden Kennwert mit einbezieht.

Erfindungsgemäß wird vorgeschlagen, dass ein die Fertigbarkeit der Schaufelgeometrie kennzeichnender Kennwert proportional zu einem Maximaldurchmesser einer Mantelfläche eines rotationssymmetrischen Körpers ist, mittels welchem sämtliche Oberflächenpunkte der Schaufelgeometrie im Bereich von Schaufeln der Schaufelgeometrie erreichbar sind.

Mit dem erfindungsgemäßen Verfahren zur Auswahl einer Schaufelgeometrie können sich aus Betriebskosten und Fertigungskosten zusammensetzende Gesamtkosten von aus Vollmaterial gefertigten Schaufelrädern signifikant gesenkt werden. Dies wird dadurch erreicht, dass die Fertigbarkeit der jeweiligen Schaufelgeometrie gegenüber bekannten Verfahren zusammen mit aerodynamischen und strukturmechanischen Eigenschaften betrachtet wird und diejenige Schaufelgeometrie ausgewählt wird, welche hinsichtlich sämtlicher dieser Eigenschaften optimiert ist. Dementsprechend können zu einem späten Zeitpunkt nötige Anpassungen der Schaufelgeometrie, wie sie bei bekannten Auswahlverfahren teilsweise nötig sind, vermieden werden und die benötigte Entwicklungszeit kann reduziert werden. Gegenüber bekannten Auswahlprozessen kann somit beispielsweise bei gleich bleibenden aerodynamischen und strukturmechanischen Eigenschaften eine fertigungsgerechtere Schaufelgeometrie ausgewählt werden.

Mit dem erfindungsgemäßen Verfahren ist es möglich, hinsichtlich aerodynamischer und strukturmechanischer Eigenschaften gleichwertige Geometrien bzw. Designs zu einem frühen Zeitpunkt hinsichtlich der Fertigungseigenschaften und somit auch der Fertigungskosten zu vergleichen und die insgesamt kostengünstigere Geometrie auszuwählen. Dies resultiert daraus, dass der die Fertigbarkeit kennzeichnende Kennwert umgekehrt proportional zu den zur Herstellung des entsprechenden Schaufelrads nötigen Fertigungskosten ist. Die Gesamtkosten können beispielsweise dadurch gesenkt werden, dass durch kleine Veränderungen der Schaufelgeometrie Betriebskosten eines derartigen Schaufelrades zwar steigen können, aber Fertigungskosten gegebenenfalls so stark gesenkt werden können, dass sich die Gesamtkosten insgesamt reduzieren.

Ein Fertigungsaufwand zur Herstellung eines aus Vollmaterial gefertigten Schaufelrads steht im direkten Zusammenhang zu einem eingesetzten Werkzeugdurchmesser. Je größer der entsprechende Maximaldurchmesser ist, desto größer ist auch der größtmögliche Durchmesser des eingesetzten Werkzeugs. Bei steigendem Werkzeugdurchmesser sinken Fertigungsaufwand und Fertigungskosten. Neben einem zylindrischen Werkzeug können auch konische oder rotationssymmetrische Formwerkzeuge, wie beispielsweise Fräswerkzeuge, zur Herstellung des Schaufelrads eingesetzt werden. Die Geometrie eines derartigen Werkzeugs kann anhand des Maximaldurchmessers des zylindrischen Körpers ermittelt werden.

Zur automatisierten Durchführung des Verfahrens kann wenigstens eine Datenermittlungseinrichtung vorgesehen sein, welche die jeweiligen einer Schaufelgeometrie zugeordneten Kennwerte ermittelt, wobei diese Kennwerte in dem Datenspeicher hinterlegt werden.

Eine weitere Optimierung der Schaufelgeometrie kann dadurch erzielt werden, dass die vorgegebenen Schaufelgeometrien in einem iterativen Prozess insbesondere von einer Datenauswerteinrichtung ermittelt werden.

Bei einer vorteilhaften Ausgestaltung des erfindungsgemäßen Verfahrens ist vorgesehen, dass sich der der jeweiligen Schaufelgeometrie zugeordnete Gesamtwert aus den zugeordneten Kennwerten und einer in dem Datenspeicher hinterlegten, dem jeweiligen Kennwert zugeordneten Gewichtung berechnet.

Sowohl die in den Patentansprüchen angegebenen Merkmale als auch die in den nachfolgenden Ausführungsbeispielen des erfindungsgemäßen Verfahrens angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Verfahrens ergeben sich aus den Patentansprüchen und dem nachfolgend unter Bezugnahme auf die Zeichnung prinzipmäßig beschriebenen Ausführungsbeispiel.

Es zeigt:
- Fig. 1: eine stark vereinfachte Darstellung einer Vorrichtung zur Durchführung des erfindungsgemäßen Verfahrens;
- Fig. 2: eine stark vereinfachte dreidimensionale Darstellung eines Ausschnitts einer Schaufelgeometrie mit einem zur Ermittlung der Fertigbarkeit der Schaufelgeometrie vorgesehenen zylindrischen Körper;
- Fig. 3: eine stark vereinfachte dreidimensionale Darstellung eines der Fig. 2 entsprechenden Ausschnitts einer Schaufelgeometrie mit einem Fräser;
- Fig. 4: eine vereinfachte Schnittdarstellung durch die Schaufelgeometrie der Fig. 2 mit dem dreidimensional dargestellten zylindrischen Körper;
- Fig. 5: eine der Fig. 4 entsprechende Schnittdarstellung der Schaufelgeometrie mit dem in einer anderen Position gezeigten zylindrischen Körper; und
- Fig. 6: eine Schnittdarstellung entlang der Linie A-A durch die Schaufelgeometrie der Fig. 5.

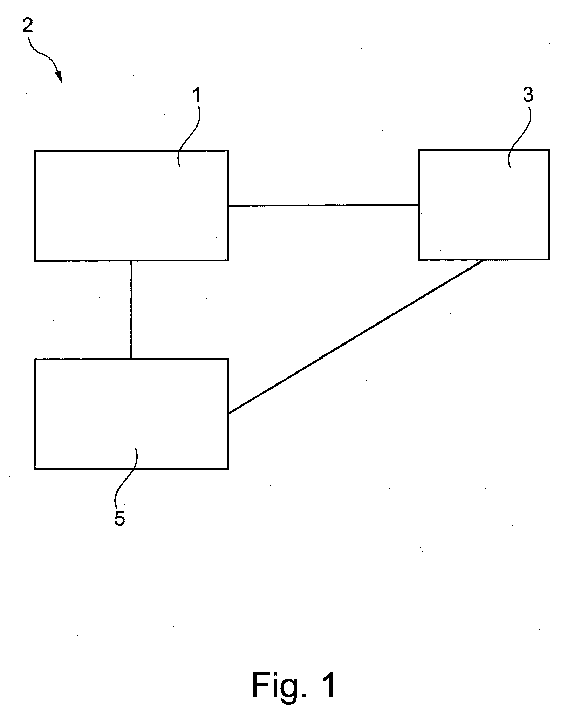

Es wird ein Verfahren zur Auswahl einer Schaufelgeometrie für ein aus Vollmaterial herzustellendes Schaufelrad für ein Triebwerk eines Fluggeräts aus einer Vielzahl von vorgegebenen Schaufelgeometrien beschrieben, mittels welchem diejenige Schaufelgeometrie ausgewählt werden kann, welche hinsichtlich aerodynamischer Eigenschaften, strukturmechanischer Eigenschaften und einer Fertigbarkeit optimiert ist. Hierzu werden von einer in Fig. 1 ersichtlichen Datenermittlungseinrichtung 1 einer Vorrichtung 2 zu in einem iterativen Prozess entwickelten Schaufelgeometrien jeweils Kennzahlen ermittelt, welche aerodynamische Eigenschaften, strukturmechanische Eigenschaften und eine Fertigbarkeit der jeweiligen Schaufelgeometrie kennzeichnen. Für jede Eigenschaft können dabei eine oder mehrere Kennzahlen ermittelt werden.

Diese Kennzahlen werden in einem Datenspeicher 3 der Vorrichtung 2 hinterlegt. Ebenfalls in dem Datenspeicher 3 ist eine Gewichtung der einzelnen Kennzahlen zueinander hinterlegt.

Eine Datenauswerteeinrichtung 5 der Vorrichtung 2 berechnet hier für jede Schaufelgeometrie einen Gesamtwert, welcher sich vorliegend als Summe der jeweiligen der Schaufelgeometrie zugeordneten Kennzahl multipliziert mit der in dem Datenspeicher 3 hinterlegten, der jeweiligen Kennzahl zugewiesenen Gewichtung ergibt.

Anschließend wählt die Datenauswerteeinrichtung 5 hier diejenige Schaufelgeometrie aus, deren Gesamtwert am größten ist. Die ausgewählte Schaufelgeometrie ist aufgrund dieses Verfahrens hinsichtlich aerodynamischer Eigenschaften, strukturmechanischer Eigenschaften und einer Fertigbarkeit optimiert.

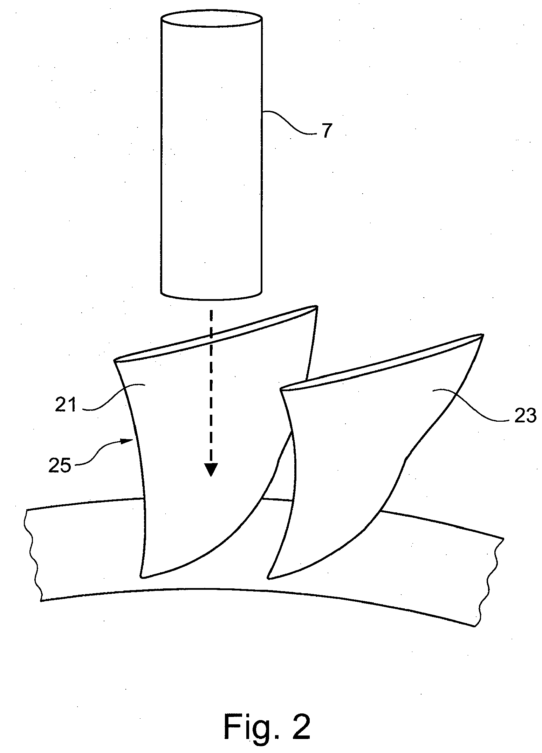

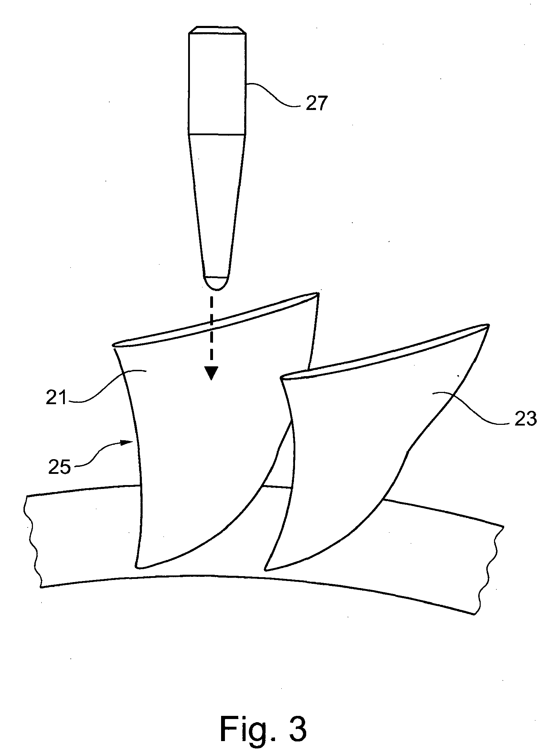

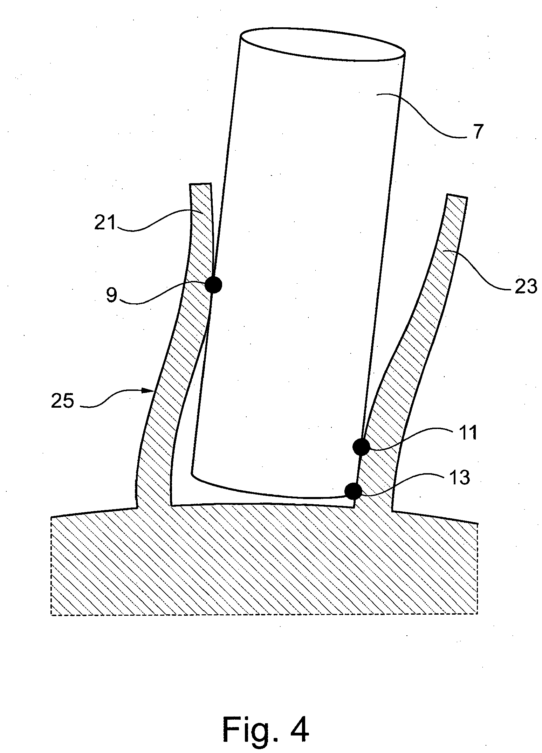

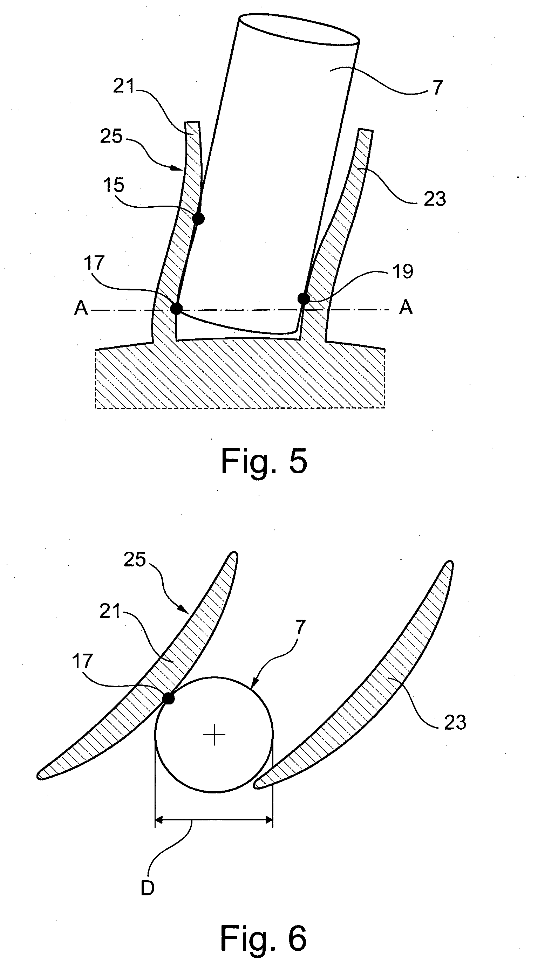

Der die Fertigbarkeit einer Schaufelgeometrie kennzeichnende Kennwert wird wie in den Fig. 2 bis 6 ersichtlich ermittelt. Der Kennwert entspricht einem maximalen Wert eines Durchmessers D einer Mantelfläche eines zylindrischen Körpers 7, wobei mit dem zylindrischen Körper 7 sämtliche Oberflächenpunkte 9, 11, 13 bzw. 15, 17, 19 im Bereich von Schaufeln 21, 23 einer Schaufelgeometrie 25 erreicht werden können.

Der Maximaldurchmesser D des zylindrischen Körpers 7 ist indirekt proportional zu den Fertigungskosten des jeweiligen Schaufelrads. Dies resultiert daraus, dass ein eine ausgewählte Schaufelgeometrie 25 aufweisendes Schaufelrad mit einer den Maximaldurchmesser D aufweisenden Fräseinrichtung 27 herstellbar ist. Da eine maximale Zustellung eines zur Herstellung des Schaufelrads vorgesehenen Fräsers abhängig von dem Maximaldurchmesser ist und diesem im Wesentlichen entspricht, sinken die Fertigungskosten mit ansteigendem Durchmesser D des Fräsers. Dementsprechend sind die Fertigungskosten bei der Schaufelgeometrie 25 mit dem größten zylindrischen Körper 7 am geringsten.

### Bezugszeichenliste

- 1: Datenermittlungseinrichtung
- 2: Vorrichtung
- 3: Datenspeicher
- 5: Datenauswerteeinrichtung
- 7: Zylindrischer Körper
- 9 bis 19: Oberflächenpunkte
- 21, 23: Schaufeln
- 25: Schaufelgeometrie
- 27: Fräseinrichtung
- D: Durchmesser

## Patentansprüche

1. Verfahren zur Auswahl einer Schaufelgeometrie (25) für ein aus Vollmaterial herzustellendes Schaufelrad für eine Turbomaschine aus einer Vielzahl von vorgegebenen Schaufelgeometrien (25), wobei für die vorgegebenen Schaufelgeometrien (25) jeweils wenigstens ein eine aerodynamische Eigenschaft der Schaufelgeometrie (25) kennzeichnender Kennwert und wenigstens ein eine Strukturmechanik der Schaufelgeometrie (25) kennzeichnender Kennwert in einem Datenspeicher (3) hinterlegt wird, und eine Datenauswerteeinrichtung (5) zu jeder Schaufelgeometrie (25) einen Gesamtwert ermittelt, welcher sich aus den zugeordneten Kennwerten berechnet, wobei die Datenauswerteeinrichtung (5) wenigstens die Schaufelgeometrie (25) auswählt, deren Gesamtwert einen Extremwert von sämtlichen berechneten Gesamtwerten der Schaufelgeometrien (25) aufweist, wobei in dem Datenspeicher (3) zusätzlich zu den Schaufelgeometrien (25) wenigstens ein eine Fertigbarkeit der jeweiligen Schaufelgeometrie (25) kennzeichnender Kennwert hinterlegt wird und die Datenauswerteeinrichtung (5) bei der Ermittlung des Gesamtwerts der jeweiligen Schaufelgeometrie (25) auch den die Fertigbarkeit kennzeichnenden Kennwert mit einbezieht, **dadurch gekennzeichnet, dass** ein die Fertigbarkeit der Schaufelgeometrie (25) kennzeichnender Kennwert proportional zu einem Maximaldurchmesser (D) einer Mantelfläche eines rotationssymmetrischen Körpers (7) ist, mittels welchem sämtliche Oberflächenpunkte (9 bis 19) der Schaufelgeometrie (25) im Bereich von Schaufeln (21, 23) der Schaufelgeometrie (25) erreichbar sind.

2. Verfahren nach Anspruch 1, **dadurch gekennzeichnet, dass** der wenigstens eine die Fertigbarkeit der jeweiligen Schaufel (21, 23) kennzeichnende Kennwert einen Maximaldurchmesser (D) einer Mantelfläche eines zylindrischen Körpers (7) darstellt, mittels welchem sämtliche Oberflächenpunkte (9 bis 19) der Schaufeln (21, 23) erreichbar sind.

3. Verfahren nach einem der Ansprüche 1 oder 2, **dadurch gekennzeichnet, dass** wenigstens eine Datenermittlungseinrichtung (1) vorgesehen ist, welche die jeweiligen einer Schaufelgeometrie (25) zugeordneten Kennwerte ermittelt, wobei diese Kennwerte in dem Datenspeicher (3) hinterlegt werden.

4. Verfahren nach einem der Ansprüche 1 bis 3, **dadurch gekennzeichnet, dass** die vorgegebenen Schaufelgeometrien (25) in einem iterativen Prozess insbesondere von einer Datenauswerteinrichtung (5) ermittelt werden.

5. Verfahren nach einem der Ansprüche 1 bis 4, **dadurch gekennzeichnet, dass** sich der der jeweiligen Schaufelgeometrie (25) zugeordnete Gesamtwert aus den zugeordneten Kennwerten und einer in dem Datenspeicher hinterlegten, dem jeweiligen Kennwert zugeordneten Gewichtung berechnet.

## Claims

1. Method for selecting out of a plurality of predetermined blade geometries (25) a blade geometry (25) for a blade wheel to be manufactured from solid material for a turbomachine, with for the predetermined blade geometries (25) at least one characteristic value identifying an aerodynamic property of the blade geometry (25) and at least one characteristic value identifying a structural mechanism of the blade geometry (25) being filed in a data memory (3), and a data evaluation unit (5) ascertaining for each blade geometry (25) a total value, which is calculated from the assigned characteristic values, with the data evaluation unit (5) selecting at least that blade geometry (25) whose total value has an extreme value of all computed total values of the blade geometries (25), with at least one characteristic value identifying a producibility of the respective blade geometry (25) being filed in the data memory (3) additionally to the blade geometries (25), and with the data evaluation unit (5) also incorporating the characteristic value identifying the producibility while ascertaining the total value of the respective blade geometry (25), **characterized in that** a characteristic value identifying the producibility of the blade geometry (25) is proportional to a maximum diameter (D) of a generated surface of a rotationally symmetrical body (7), by means of which all surface points (9 to 19) of the blade geometry (25) in the area of the blades (21, 23) can be reached.

2. Method in accordance with Claim 1, **characterized in that** the at least one characteristic value identifying the producibility of the respective blade (21, 23) represents a maximum diameter (D) of a skin surface of a cylindrical body (7), by means of which all surface points (9 to 19) of the blades (21, 23) can be reached.

3. Method in accordance with one of the Claims 1 or 2, **characterized in that** at least one data detecting unit (1) is provided which ascertains the respective characteristic values assigned to a blade geometry (25), with these characteristic values being filed in the data memory (3).

4. Method in accordance with one of the Claims 1 to 3, **characterized in that** the predetermined blade geometries (25) are ascertained in an iterative process, in particular by a data evaluation unit (5).

5. Method in accordance with one of the Claims 1 to 4, **characterized in that** the total value assigned to the respective blade geometry (25) is calculated from the assigned characteristic values and from a weighting assigned to the respective characteristic value and filed in the data memory.

## Revendications

1. Procédé de sélection d'une géométrie d'aube (25) parmi une pluralité de géométries d'aube (25) prédéfinies pour une roue à aubes à fabriquer dans un matériau massif pour une turbomachine, sachant que pour les géométries d'aube (25) prédéfinies sont respectivement enregistrés dans une mémoire de données (3) au moins un paramètre caractérisant une propriété aérodynamique de la géométrie d'aube (25) et au moins un paramètre caractérisant une mécanique structurelle de la géométrie d'aube (25), et qu'un dispositif d'exploitation de données (5) détermine pour chaque géométrie d'aube (25) une valeur globale qui se calcule à partir des paramètres associés, que le dispositif d'exploitation de données (5) sélectionne au moins la géométrie d'aube (25) dont la valeur globale présente une valeur extrême de la totalité des valeurs globales calculées des géométries d'aube (25), que dans la mémoire de données (3), outre les géométries d'aube (25), est enregistré au moins un paramètre caractérisant une fabricabilité de la géométrie d'aube (25) respective et que le dispositif d'exploitation de données (5), lors de la détermination de la valeur globale de la géométrie d'aube (25) respective prend également en compte le paramètre caractérisant la fabricabilité, le procédé étant **caractérisé en ce qu'**un paramètre caractérisant la fabricabilité de la géométrie d'aube (25) est proportionnel à un diamètre maximal (D) d'une surface enveloppante d'un corps (7) à symétrie de révolution au moyen duquel sont accessibles tous les points de la surface (9 à 19) de la géométrie d'aube (25) dans la zone d'aubes (21, 23).

2. Procédé selon la revendication n° 1, **caractérisé en ce que** l'au moins un paramètre caractérisant la fabricabilité de l'aube (21, 23) respective représente un diamètre maximal (D) d'une surface enveloppante d'un corps (7) cylindrique, au moyen duquel sont accessibles tous les points de la surface (9 à 19) des aubes (21, 23).

3. Procédé selon une des revendications n° 1 ou n° 2, **caractérisé en ce qu'**est prévu au moins un dispositif de détermination de données (1) qui détermine les paramètres respectifs associés à une géométrie d'aube (25), lesdits paramètres étant enregistrés dans la mémoire de données (3).

4. Procédé selon une des revendications n° 1 à n° 3, **caractérisé en ce que** les géométries d'aube (25) prédéfinies sont déterminées dans un processus itératif en particulier par un dispositif d'exploitation de données (5).

5. Procédé selon une des revendications n° 1 à n° 4, **caractérisé en ce que** la valeur globale associée à la géométrie d'aube (25) respective se calcule à partir des paramètres associés et d'une pondération enregistrée dans la mémoire de données et associée au paramètre respectif.
